# EUROPÄISCHE PATENTSCHRIFT

(11) **EP 2 085 864 B1**
(45) Veröffentlichungstag und Bekanntmachung des Hinweises auf die Patenterteilung: **01.04.2015**
(21) Anmeldenummer: 08001751.0
(22) Anmeldetag: 30.01.2008
(51) Int. Cl.: G06F 3/048

(54) **System und Verfahren zur Fenstersteuerung eines Bildschirms**
System and method for controlling a window of a monitor
Système et procédé de commande de fenêtre d'un écran

(43) Veröffentlichungstag der Anmeldung: 05.08.2009
(73) Patentinhaber: Siemens Aktiengesellschaft, 80333 München (DE)
(72) Erfinder: Hey, Uwe, 90475 Nürnberg (DE); Prechtl, Christian, 90419 Nürnberg (DE); Wittenberg, Carsten, Dr., 91564 Neuendettelsau (DE)

(56) Entgegenhaltungen:
- US-A1- 2003 081 006

## Beschreibung

**Zeitgemäße** Bildschirme sind als Screens, Videoprojektoren oder als Bildschirme von Computersystemen ausgebildet, wobei letztere beispielsweise handelsübliche PC, Steuerungscomputer für Produktionsanlagen etc. sein können. Auf dem Bildschirm ist in der Regel ein Arbeitsbereich vorgesehen, in dem vom Benutzer Objekte, Elemente und Werte bearbeitet werden. Die Bearbeitung wird von untergeordneten Bereichen unterstützt, die in der Regel zwischen Bildschirmrand und Arbeitsbereich angeordnet sind. Die untergeordneten Bereiche weisen Werkzeuge, Projektbäume und Eigenschaften etc. auf.

Während der Bearbeitung der Objekte und Elemente treten nun häufig Situationen auf, in denen der Benutzer möglichst viel Platz für den eigentlichen Arbeitsbereich für einen bestimmten Zeitraum benötigt. Die untergeordneten Bereiche werden dann nicht benötigt.

Möchte der Benutzer/ Anwender den Arbeitsbereich in diesem Fall maximieren, muss er beim Stand der Technik alle untergeordneten Bereiche über zugeordnete Fenstersteuerelemente einzeln schließen. Der Arbeitsbereich hat dann seine maximale Größe erreicht und nimmt einen als "Optimized" Zustand bezeichneten Zustand ein. Soll der ursprüngliche Zustand wiederhergestellt werden ("Embedded"-Zustand), müssen alle gewünschten untergeordneten Bereiche wieder im einzelnen über weitere Fenstersteuerelemente geöffnet werden. Das Schließen und Öffnen aller untergeordneten Bereiche ist aber für eine effiziente Bearbeitung der Objekte und Elemente nicht sonderlich förderlich.

Die US 2003/0081006 A1 befasst sich mit dem Problem des Maximierens, und zwar ist das Maximieren aus Gründen der unzureichenden Auflösung nicht immer möglich. Unter Maximieren wird in der US 2003/0081006 A1 eine solche Darstellung verstanden, bei der untergeordnete Bereiche nach wie vor angezeigt sind, aber der verbleibende Bereich vollständig von einem Arbeitsbereich ausgefüllt ist.

Der Erfindung liegt die Aufgabe zugrunde, ein System und ein Verfahren anzugeben, wie der Arbeitsbereich komfortabel gesteuert werden kann.

Die Erfindung wird ausgehend von den in den Oberbegriffen der Patentansprüche 1 und 3 angegebenen Merkmale durch die in den kennzeichnenden Teilen beanspruchten Merkmale gelöst.

Der Vorteil der Erfindung ist darin zu sehen, dass die bislang existierenden Fenstersteuerelemente (Window-Management Buttons) um ein weiteres Fenstersteuerelement erweitert werden (Button mit wechselnden Icons). Befindet sich eine Applikation im Normalzustand, so wird durch Betätigen des weiteren Fenstersteuerelementes der Arbeitsbereich optimiert und die untergeordneten Bereiche ausgeblendet ("Optimized"-Zu-stand). Soll die Applikation wieder in den Normalzustand überführt werden, wird durch erneutes Betätigen der Normalzustand ("Embedded"-Zustand) wiederhergestellt.

Die Erfindung wird im Folgenden anhand eines figürlich dargestellten Ausführungsbeispiels näher erläutert.

Es zeigen:
- Figur 1: Fenstersteuerelemente **gemäß** dem Stand der Technik,
- Figur 2: einen Bildschirm mit einem Arbeitsbereich und einer Mehrzahl von Unterbereichen,
- Figur 3: die Optimierung des Arbeitsbereiches
- Figur 4: das **erfindungsgemäße** Fenstersteuerelement

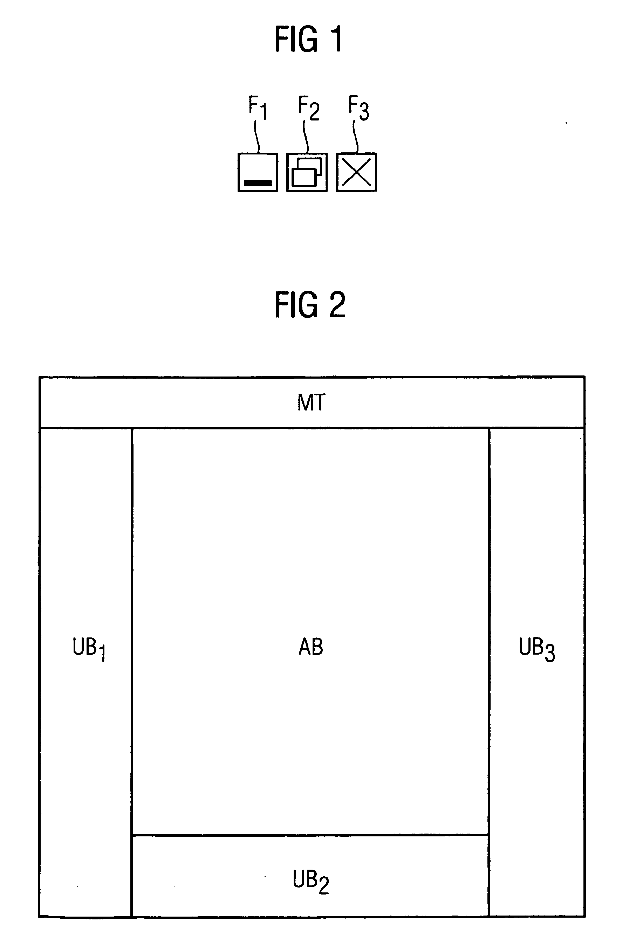

In Figur 1 sind Fenstersteuerelemente F₁, F₂, F₃ **gemäß** dem Stand der Technik aufgezeigt. Hierbei ist dem Fenstersteuerelement F₁ die Funktionalität "Minimize" zugeordnet, **demgemäß** bei Betätigen dieses Elementes das Fenster minimiert wird.

Dem Fenstersteuerelement F₂ ist die Funktionalität "Embedded" zugeordnet, d. h. bei Betätigen dieses Elementes wird der Zustand "Optimized" wieder rückgängig gemacht. Dem Fenstersteuerelement F₃ ist die Funktionalität "Close" zugeordnet, d. h. bei Betätigen dieses Elementes wird das Fenster geschlossen.

Im Folgenden wird beispielhaft davon ausgegangen, dass es sich bei dem Bildschirm um den Bildschirm eines Computersystems handelt. Der Arbeitsbereich soll dann die Funktion eines Editors haben.

Figur 2 zeigt beispielhaft, wie der Bildschirm des Computersystems in einen Arbeitsbereich AB und eine Mehrzahl von Unterbereiche UB₁, UB₂ und UB₃ organisiert ist. An oberster Stelle ist ein weiterer Bereich MT vorgesehen, der auch als Menu - und Toolbar bezeichnet wird.

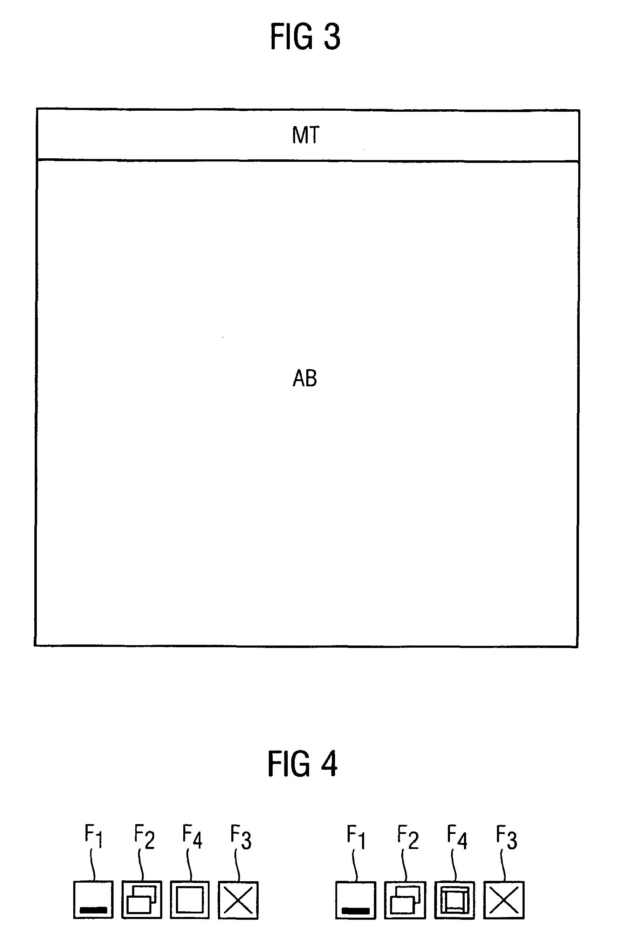

Wünscht der Anwender oder Benutzer nun den Arbeitsbereich zu optimieren, muss er beim Stand der Technik die Unterbereiche UB₁, UB₂ und UB₃ einzeln durch Betätigen der zugeordneten Fenstersteuerelemente F₁ wegklicken. Da hier beispielhaft 3 Unterbereiche aufgezeigt sind, sind auch 3 Fenstersteuerelemente F₁ zu betätigen. Das Ergebnis dieser Aktion ist in Figur 3 aufgezeigt. Der Arbeitsbereich AB nimmt dann im wesentlichen den vollen Bildschirm ein, lediglich die Menu - und Toolbar MT grenzt noch den Arbeitsbereich AB vom oberen Bildschirmrand ab. Die Unterbereiche UB₁, UB₂ und UB₃ sind ausgeblendet.

**Erfindungsgemäß** ist nun vorgesehen, ein weiteres Fenstersteuerelement F₄ vorzusehen. Die entsprechenden Verhältnisse sind in Figur 4 aufgezeigt. Hier handelt es sich um ein Fenstersteuerelement, das sein optisches Erscheinungsbild in Abhängigkeit von dem vom Arbeitsbereich eingenommenen Zustand ändert (Button mit einem wechselnden Icon).

Zur Optimierung des Arbeitsbereiches AB wird das Fenstersteuerelement F₄ vom Anwender betätigt. Damit wird die dem Fenstersteuerelement F₄ zugeordnete Funktionalität ("Optimize") **aktiviert.** Der Arbeitsbereich nimmt dann den **"Optimized**"-Zustand **gemäß** Figur 3 ein, das Fenstersteuerelement F₄ hat das in Figur 4 beispielhaft aufgezeigte Aussehen (rechte Seite). Die Unterbereiche UB₁, UB₂ und UB₃ sind ausgeblendet. Soll der ursprüngliche Zustand ("Embedded" Zustand) wiederhergestellt werden, wird vom Anwender das Fenstersteuerelement F₄ erneut betätigt. Die Unterbereiche UB₁, UB₂ und UB₃ sind wieder eingeblendet. Das Fenstersteuerelement hat dann wieder das Aussehen F₄ **gemäß** Figur 4 (linke Seite).

Der Vorteil der Erfindung liegt für den Benutzer darin, dass er durch einmaliges Betätigen/ Aktivieren des Fenstersteuerelementes F₄ alle untergeordneten Bereiche ausblendet, womit der Arbeitsbereich maximiert ist. Ein erneutes einmaliges Betätigen/ Aktivieren blendet alle untergeordneten Bereiche wieder ein.

## Patentansprüche

1. Verfahren zur Steuerung des Arbeitsbereichs auf einem Bildschirm, mit wenigstens einem untergeordneten Bereich (UB₁, UB₂, UB₃), und mit einem Arbeitsbereich (AB), dessen Struktur durch Betätigen wenigstens eines Fenstersteuerelementes (F₁, F₂, F₃) beeinflusst wird,
**dadurch gekennzeichnet,**
**dass** wenigstens ein zusätzliches Fenstersteuerelement (F₄) vorgesehen wird, durch dessen Betätigung der Arbeitsbereich des Bildschirmes wahlweise wenigstens einen Normalzustand oder einen als "Optimize"-Zustand bezeichneten Zustand einnimmt, wobei der Normalzustand durch die Aufteilung des Bildschirmes in den Arbeitsbereich (AB) und den wenigstens einen untergeordneten Bereich (UB₁, UB₂, UB₃) geprägt wird und der "Optimize"-Zustand ein Zustand ist, in dem der Bildschirm im Wesentlichen durch den Arbeitsbereich (AB) ausgefüllt wird und der untergeordnete Bereich (UB₁, UB₂, UH₃) nicht dargestellt ist.

2. Verfahren nach Anspruch 1,
**dadurch gekennzeichnet,**
dass das optische Erscheinungsbild des zusätzlichen Fenstersteuerelementes (F₄) je nach Zustand verändert wird.

3. System zur Steuerung des Arbeitsbereichs auf einem Bildschirm, mit wenigstens einem untergeordneten Bereich (UB₁, UB₂, UB₃), und mit einem Arbeitsbereich (AB), dessen Struktur durch Betätigen wenigstens eines Fenstersteuerelementes (F₁, F₂, F₃) beeinflusst werden kann,
**dadurch gekennzeichnet,**
**dass** wenigstens ein zusätzliches Fenstersteuerelement (F₄) vorgesehen ist, durch dessen Betätigung der Arbeitsbereich des Bildschirmes wahlweise wenigstens einen Normalzustand oder einen als "Optimize" Zustand bezeichneten Zustand einnimmt, wobei der Normalzustand durch die Aufteilung des Bildschirmes in den Arbeitsbereich (AB) und den wenigstens einen untergeordneten Bereich (UB₁, UB₂, UB₃) geprägt wird und der "Optimize"-Zustand ein Zustand ist, in dem der Bildschirm im Wesentlichen durch den Arbeitsbereich (AB) ausgefüllt wird und der untergeordnete Bereich (UB₁, UB₂, UB₃) nicht dargestellt ist.

4. System nach Anspruch 3,
**dadurch gekennzeichnet,**
dass das optische Erscheinungsbild des zusätzlichen Fenstersteuerelementes (F₄) sich nach Massgabe des Zustandes verändert.

5. System nach **Anspruch 3 oder 4,**
**dadurch gekennzeichnet,**
**dass** ein Computersystem den Bildschirm steuert.

## Claims

1. Method for controlling the work area on a screen, having at least one subordinate area (UB₁, UB₂, UB₃), and having a work area (AB) whose structure is influenced by the operation of at least one window control element (F₁, F₂, F₃),
**characterized**
in that at least one additional window control element (F₄) is provided, the operation of which prompts the work area of the screen to adopt either at least one normal state or a state called an "Optimize" state, the normal state being identified by the splitting of the screen into the work area (AB) and the at least one subordinate area (UB₁, UB₂, UB₃) and the "Optimize" state being a state in which the screen is essentially filled by the work area (AB) and the subordinate area (UB₁, UB₂, UB₃) is not shown.

2. Method according to Claim 1,
**characterized**
in that the visual appearance of the additional window control element (F₄) is altered depending on the state.

3. System for controlling the work area on a screen, having at least one subordinate area (UB₁, UB₂, UB₃), and having a work area (AB) whose structure can be influenced by the operation of at least one window control element (F₁, F₂, F₃),
**characterized**
in that at least one additional window control element (F₄) is provided, the operation of which prompts the work area of the screen to adopt either at least one normal state or a state called an "Optimize" state, the normal state being identified by the splitting of the screen into the work area (AB) and the at least one subordinate area (UB₁, UB₂, UB₃) and the "Optimize" state being a state in which the screen is essentially filled by the work area (AB) and the subordinate area (UB₁, UB₂, UB₃) is not shown.

4. System according to Claim 3,
**characterized**
in that the visual appearance of the additional window control element (F₄) alters on the basis of the state.

5. System according to Claim 3 or 4,
**characterized**
in that a computer system controls the screen.

## Revendications

1. Procédé de commande de la zone de travail sur un écran, comportant au moins une zone subordonnée (UB₁, UB₂, UB₃) et une zone de travail (AB) dont la structure est influencée par l'actionnement d'au moins un élément de commande de fenêtre (F₁, F₂, F₃), **caractérisé en ce qu'**est prévu au moins un élément supplémentaire de commande de fenêtre (F₄) par l'actionnement duquel la zone de travail de l'écran se met, au choix, au moins dans un état normal ou dans un état appelé état « optimize », l'état normal étant **caractérisé par** la répartition de l'écran en la zone de travail (AB) et l'au moins une zone subordonnée (UB₁, UB₂, UB₃), et l'état « optimize » étant un état dans lequel l'écran est occupé pour l'essentiel par la zone de travail (AB) et la zone subordonnée (UB₁, UB₂, UB₃) n'est pas représentée.

2. Procédé selon la revendication 1, **caractérisé en ce que** l'aspect visuel de l'élément supplémentaire de commande de fenêtre (F₄) est modifié selon l'état.

3. Système de commande de la zone de travail sur un écran, comportant au moins une zone subordonnée (UB₁, UB₂, UB₃) et une zone de travail (AB) dont la structure peut être influencée par l'actionnement d'au moins un élément de commande de fenêtre (F₁, F₂, F₃), **caractérisé en ce qu'**est prévu au moins un élément supplémentaire de commande de fenêtre (F₄) par l'actionnement duquel la zone de travail de l'écran se met, au choix, au moins dans un état normal ou dans un état appelé état « optimize », l'état normal étant **caractérisé par** la répartition de l'écran en la zone de travail (AB) et l'au moins une zone subordonnée (UB₁, UB₂, UB₃), et l'état « optimize » étant un état dans lequel l'écran est occupé pour l'essentiel par la zone de travail (AB) et la zone subordonnée (UB₁, UB₂, UB₃) n'est pas représentée.

4. Système selon la revendication 3, **caractérisé en ce que** l'aspect visuel de l'élément supplémentaire de commande de fenêtre (F₄) se modifie selon l'état.

5. Système selon la revendication 3 ou 4, **caractérisé en ce qu'**un système informatique commande l'écran.
